# FASCICULE DE BREVET EUROPEEN

(11) **EP 4 118 479 B1**
(45) Date de publication et mention de la délivrance du brevet: **08.05.2024**
(21) Numéro de dépôt: 21716065.4
(22) Date de dépôt: 12.03.2021
(51) Int. Cl.: G02B 23/00, G03B 17/17, G02B 23/02

(54) **PROCÉDÉ D'ACQUISITION D'IMAGE D'UN ASTRE ET APPAREIL POUR LA MISE EN OEUVRE DU PROCÉDÉ**
VERFAHREN ZUR ERFASSUNG EINES BILDES EINES HIMMELSKÖRPERS UND GERÄT ZUR DURCHFÜHRUNG DES VERFAHRENS
METHOD FOR ACQUIRING AN IMAGE OF A CELESTIAL BODY AND APPARATUS FOR IMPLEMENTING THE METHOD

(30) Priorité: 13.03.2020 FR 2002481
(43) Date de publication de la demande: 18.01.2023
(73) Titulaire: Unistellar, 13008 Marseille (FR)
(72) Inventeur: MALVACHE, Arnaud, 13710 FUVEAU (FR); VANHOUTTE, Erik, 13009 MARSEILLE (FR)
(74) Mandataire: Roman, Alexis
(86) Numéro de dépôt international: PCT/EP2021/056364
(87) Numéro de publication internationale: WO 2021/180939

(56) Documents cités:
- US-A1- 2003 218 686
- US-A1- 2015 028 212

## Description

### Domaine technique.

L'invention a pour objet un procédé d'acquisition d'image d'un astre. Elle concerne également un appareil de capture d'image comportant des capteurs interchangeables pour la mise en oeuvre de ce procédé.

L'invention se rapporte au domaine technique des appareils de prise de vue et notamment à celui des télescopes (ou lunettes astronomiques).

### Etat de la technique.

Un télescope est destiné à observer des astres tels que des planètes, des comètes, des nébuleuses, des galaxies, et de manière générale des objets célestes proches ou lointains. Le télescope est notamment utilisé par les astronomes bien que son utilisation se soit démocratisée depuis quelques années et que l'observation des étoiles soit devenue une passion pour de nombreuses personnes de différentes générations. Afin de répondre à la demande des consommateurs de plus en plus nombreux, les fabricants ont dû diversifier ces instruments pour répondre à la demande d'un public plus large.

Un utilisateur souhaitant observer à la fois des astres de grande taille (ex : nébuleuses, galaxies) et des astres de petite taille (ex : planètes, lune) doit posséder plusieurs oculaires. C'est en changeant d'oculaire que l'utilisateur peut adapter le grossissement en fonction de la nature de l'astre observé. En effet, les astres de grande taille sont généralement peu lumineux et leur observation nécessite un faible grossissement. A l'inverse, les astres plus petits sont généralement plus lumineux et leur observation doit être réalisée avec un grossissement plus fort. En pratique, ce changement d'oculaires est particulièrement contraignant pour l'utilisateur.

Une autre possibilité pour l'utilisateur serait d'utiliser au moins deux télescopes distincts. En effet, afin d'obtenir la résolution adéquate pour chaque type d'astre, il convient d'utiliser des matrices de capteurs de conception différentes. En fonction des matrices de capteurs utilisées, la taille des pixels est différente. L'observation d'astres de grande taille, peu lumineux, nécessite l'utilisation de pixels relativement larges (pour l'acquisition d'un grand champ de vue) et de fait relativement sensibles, tandis que l'observation d'astres plus petits et plus lumineux, peut être réalisée avec des pixels plus petits (le champ de vue acquis étant plus étroit) et de fait moins sensibles. Pour avoir une image de l'astre avec une bonne résolution, l'utilisateur doit donc choisir son télescope en fonction de la nature de l'astre qu'il souhaite observer, ce qui peut être contraignant, notamment en termes de coûts.

Un objectif de l'invention est de remédier aux inconvénients précités.

Un autre objectif de l'invention est de proposer une technique permettant d'acquérir, avec un seul appareil, une image d'un astre, avec une bonne résolution, que l'astre soit de grande taille et sombre ou de petite taille et lumineux.

Encore un autre objectif de l'invention est de proposer un appareil pour l'acquisition d'image d'un astre de grandes ou petites dimensions, dont la conception est simple, facile d'utilisation et peu onéreux.

On connaît dans l'état de la technique le document US 20150028212 qui décrit un appareil cherchant à suivre le trajet d'un missile en effectuant, selon les besoins, un plan large et un plan serré de celui-ci. Compte tenu de son objet qui vise à l'acquisition d'image d'un objet circulant dans l'atmosphère terrestre, un tel document technique ne présente rien de commun avec le procédé et l'appareil d'acquisition d'image d'un astre selon la présente invention.

### Présentation de l'invention.

La solution proposée par l'invention est un procédé d'acquisition d'image d'un astre, comportant les étapes suivantes :
- utiliser un appareil comportant un corps creux à l'intérieur duquel pénètrent, en usage, des rayons lumineux provenant d'un astre observé, ledit astre observé étant choisi parmi au moins un premier astre d'une première nature et un deuxième astre d'une deuxième nature, la nature du premier astre étant différente de la nature du deuxième astre,
- agencer, dans le corps creux, un système optique présentant un axe optique, lequel système optique est configuré de sorte que les rayons lumineux forment, dans un foyer image situé dans un plan focal, une image de l'astre observé. Le procédé est remarquable en ce qu'il comprend également les étapes suivantes :

- agencer dans le corps creux au moins une première et une deuxième matrices de capteurs optiques comportant chacun une pluralité de pixels configurés pour acquérir l'image, respectivement du premier astre et du deuxième astre, formée dans le foyer image, lesquelles matrices présentent respectivement des pixels de taille différente l'une de l'autre,
- sélectionner une des matrices et la placer dans le foyer image, l'autre matrice restant en dehors dudit foyer image, la sélection de la matrice étant réalisée en fonction de la nature de l'astre observé, soit le susdit premier astre de première nature soit le susdit deuxième astre de deuxième nature.

Dans le cadre de la présente invention, on entend par l'expression « astre de nature différente » en lien avec le premier et le deuxième astre, le fait que ces deux astres présentent une taille et/ou une luminosité différente. Ainsi, une telle nature différente de ces deux astres signifie que chacun présente une nature propre, du point de vue de sa taille et/ou de sa luminosité.

Ainsi, la nature de l'astre ne renvoie pas ici spécifiquement au fait que l'astre susceptible d'être observé par la première matrice et la deuxième matrice n'est pas identique en terme d'objet céleste. De façon plus précise et à titre d'exemple, il est évident que deux planètes de taille sensiblement identique n'appartement pas à un même système solaire ou à une même galaxie sont des objets célestes identiques. Pour autant, dans le cadre de la présente invention, ces deux planètes ne seront pas considérées comme des astres de même nature, compte tenu du fait que leur luminosité, depuis la terre, n'est pas la même.

Concernant le critère de luminosité, relativement à la nature de l'astre considéré, celui-ci renvoie à la magnitude de cet astre, observé depuis la surface de la terre. On sait que les astres visibles à l'œil nu présentent une magnitude inférieure à 6, avec à titre d'exemple l'étoile Vega présentant une magnitude égale à 0 et le soleil de notre système solaire une magnitude égale à -27, l'un et l'autre étant observés depuis la surface terrestre. A l'opposé, les astres les moins visibles présentent une magnitude supérieure à 16.

La magnitude considérée pour ces mesures est avantageusement une magnitude absolue ou une magnitude surfacique, bien connue de l'homme du métier, cette dernière étant plus pertinente pour des objets célestes étendus tels que des galaxies ou des nébuleuses.

Ainsi, dans le cadre de la présente invention, on peut prévoir une pluralité de matrices, chacune destinée à observer un domaine de magnitudes propres. A titre d'exemple, le système d'acquisition d'images selon l'invention comprend quatre matrices distincts :
- la première matrice présentant des pixels d'une taille adaptée à des astres de magnitude compris entre 0 et 6 (borne supérieure comprise),
- la deuxième matrice présentant des pixels d'une taille adaptée à des astres de magnitude compris entre 6 et 10 (borne supérieure comprise),
- la troisième matrice présentant des pixels d'une taille adaptée à des astres de magnitude compris entre 10 et 14 (borne supérieure comprise), et
- la première matrice présentant des pixels d'une taille adaptée à des astres de magnitude présentant une magnitude supérieure à 14.

Dans la suite de la présentation de l'invention, par souci de simplification, on considère essentiellement deux natures différentes d'astres consistant d'une part en une planète de notre système solaire considérée comme un astre de petite taille présentant une forte luminosité et d'autre part une nébuleuse, ou amas de galaxies, considérée comme un astre de grande taille présentant une faible luminosité.

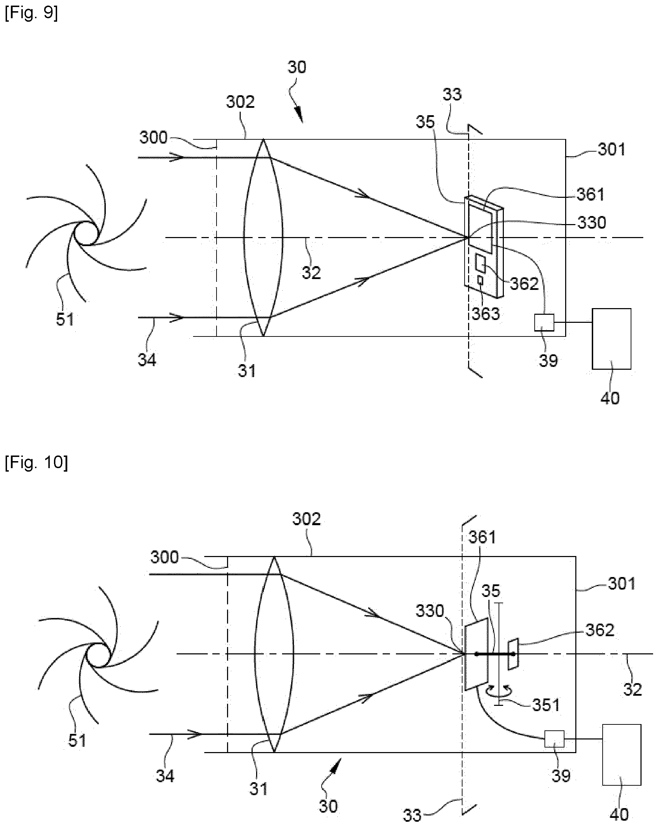

Pour autant, la présente invention ne se limite pas à définir deux natures d'astres, par exemple en distinguant des astres de petites tailles fortement lumineux et des astres de grande taille faiblement lumineux. Ainsi, l'invention peut définir bien plus que deux natures d'astres - correspondant à autant de matrices de capteurs optiques - pour catégoriser les astres observés en fonction de leur taille et/ou de leur luminosité. A titre d'exemple, sur la figure 9, l'invention est illustrée avec trois matrices de capteurs optiques mais le procédé et l'appareil selon l'invention pourront bien entendu comprendre un plus grand nombre de nature d'astres observés / de matrices de capteurs optiques.

L'utilisation de deux matrices de capteurs optiques de conception différentes - en l'espèce une taille de pixels différente entre la première et la deuxième matrice à ce stade de la définition de l'invention - permet à l'utilisateur de visualiser avec un même appareil des astres de nature différente. Pour acquérir, avec une bonne résolution, une image d'un astre de grande taille et peu lumineux, une première matrice de capteurs est sélectionnée. L'autre matrice de capteurs sera sélectionnée pour acquérir l'image d'un astre plus petit et plus lumineux, que l'astre soit de grande taille et sombre ou de petite taille et lumineux. Les coûts de fabrication, d'achat, d'entretien et de manutention d'un tel appareil sont ainsi fortement réduits.

Le fait d'utiliser deux types de matrices de capteurs optiques interchangeables permet de s'affranchir de l'utilisation de deux télescopes ou de différentes optiques, pour observer des astres de grande et de petite taille. Ainsi, l'utilisateur est en mesure de sélectionner alternativement l'une ou l'autre des matrices de capteurs, en fonction de l'astre qu'il désire observer.

D'autres caractéristiques avantageuses du procédé objet de l'invention sont listées ci-dessous. Chacune de ces caractéristiques peut être considérée seule ou en combinaison avec les caractéristiques remarquables définies ci-dessus. Chacune de ces caractéristiques contribue, le cas échéant, à la résolution de problèmes techniques spécifiques définis plus avant dans la description et auxquels ne participent pas nécessairement les caractéristiques remarquables définies ci-dessus. Ces dernières peuvent faire l'objet, le cas échéant, d'une ou plusieurs demandes de brevet divisionnaires :
Selon une possibilité offerte par l'invention, la première et la deuxième matrices s'étendent dans le plan focal lors de l'ensemble des étapes du procédé.

Dans ce cadre, avantageusement, l'étape de sélection d'une des matrices s'opère par translation de l'une et/ou de l'autre des matrices de manière à placer l'une des matrices dans **le** foyer image.

Selon une autre possibilité offerte par l'invention, l'étape de sélection d'une des matrices s'opère par rotation de l'une et/ou de l'autre des matrices, au moins l'une des matrices n'étant initialement pas dans **le** plan focal.

**Selon un mode d'exécution de l'invention, le procédé** comprend les étapes suivantes :
- fixer les matrices sur un support mobile,
- déplacer le support mobile pour placer la matrice sélectionnée dans le foyer image.

**Avantageusement, le procédé selon l'invention** comprend les étapes consistant à :
- motoriser le support mobile **au moyen d'un moteur,**
- piloter le moteur pour déplacer le support mobile.

**Avantageusement, le procédé selon l'invention** comprend les étapes suivantes :
- installer les matrices dans des positions fixes,
- utiliser un système optique comportant un élément optique qui est mobile de manière à faire varier la position du foyer image,
- déplacer **l'élément optique mobile** de manière à ramener le foyer image au niveau de la matrice sélectionnée.

**Avantageusement, le procédé selon l'invention** comprend les étapes consistant à :
- motoriser **l'élément optique mobile au moyen d'un moteur,**
- piloter le moteur pour déplacer **l'élément** optique mobile.

**Selon un aspect avantageux de l'invention,** le procédé comprend les étapes consistant à :
- connecter le moteur à une unité de traitement,
- piloter le moteur :
- **en activant un ou plusieurs boutons aménagés sur l'appareil et** connectés à **l'unité** de traitement, ou
- en transmettant des instructions de commande **à l'unité de traitement,** lesquelles instructions sont émises depuis un téléphone intelligent.

**Selon un autre aspect avantageux de l'invention,** le procédé comprend les étapes consistant à :
- **enregistrer, dans une base de données, des enregistrements d'astres, chaque** enregistrement étant associé à une des matrices et à des données de localisation **en temps réel de l'astre,**
- **sélectionner, dans la base de données, un enregistrement d'astre,**
- piloter le moteur en fonction de la matrice **associée à l'enregistrement sélectionné,**
- orienter **automatiquement l'appareil** vers la **localisation de l'astre,** en fonction des **données de localisation associées à l'enregistrement sélectionné.**

Selon un autre **aspect avantageux de l'invention,** le procédé comprend les étapes consistant à :
- acquérir **une image d'un astre observé dans une scène d'observation, laquelle** acquisition est réalisée **au moyen d'une des matrices** sélectionnée en fonction de la nature dudit astre,
- **exécuter un processus informatique configuré pour détecter le déplacement d'un autre astre dans la scène d'observation,**
- sélectionner **l'autre matrice,**
- **piloter le moteur en fonction de l'autre** matrice sélectionnée.

Selon un autre aspect **avantageux de l'invention,** le procédé comprend les étapes consistant à :
- **enregistrer, dans une base de données, des enregistrements d'astres, chaque** enregistrement étant associé à une des matrices et à au moins un élément **caractéristique de l'astre,**
- acquérir **une image d'un astre,** laquelle acquisition est réalisée au moyen **d'une** des matrices,
- exécuter un processus informatique de reconnaissance configuré pour détecter, **dans l'image acquise, au moins un élément caractéristique dudit astre,**
- identifier, **dans la base de données, un enregistrement d'astre associé à un** élément caractéristique similaire à celui détecté,
- sélectionner la matrice **associée à l'enregistrement identifié,**
- si la matrice **ayant acquise l'image ne correspond pas à la matrice sélect**ionnée, alors piloter le moteur en fonction de ladite matrice sélectionnée.

**Selon une possibilité offerte par l'invention,** la première et la deuxième matrices **s'étendent dans le** plan focal **lors de l'ensemble des étapes du procédé.**

Dans ce cadre, avantageu**sement, l'étape de sélection d'une des matrices s'opère par translation de l'une et/ou de l'autre des matrices de manière à placer l'une des matrices dans le foyer image.**

**Selon une autre possibilité offerte par l'invention, l'étape de sélection d'une des matrices s'opère par rotation de l'une et/ou de l'autre des matrices, au moins l'une des matrices n'étant initialement pas dans le plan focal.**

**Selon un mode d'exécution de l'invention, le procédé** comprend les étapes suivantes :
- fixer les matrices sur un support mobile,
- déplacer le support mobile pour placer la matrice sélectionnée dans le foyer image.

**Avantageusement, le procédé selon l'invention** comprend les étapes consistant à :
- motoriser le support mobile **au moyen d'un moteur,**
- piloter le moteur pour déplacer le support mobile.

**Avantageusement, le procédé selon l'invention** comprend les étapes suivantes :
- installer les matrices dans des positions fixes,
- utiliser un système optique comportant un élément optique qui est mobile de manière à faire varier la position du foyer image,
- déplacer l'élément optique mobile de manière à ramener le foyer image au niveau de la matrice sélectionnée.

**Avantageusement, le procédé selon l'invention** comprend les étapes consistant à :
- motoriser **l'élément optique** mobile **au moyen d'un moteur,**
- piloter le moteur pour déplacer **l'élément optique mobile.**

**Selon un aspect avantageux de l'invention,** le procédé comprend les étapes consistant à :
- connecter le moteur à une unité de traitement,
- piloter le moteur :
- en activant un ou plusieurs boutons aménagés sur l'appareil et connectés à l'unité de traitement, ou
- en transmettant des instructions de commande à l'unité de traitement, lesquelles instructions sont émises depuis un téléphone intelligent.

Selon un autre aspect avantageux de l'invention, le procédé comprend les étapes consistant à :
- enregistrer, dans une base de données, des enregistrements d'astres, chaque enregistrement étant associé à une des matrices et à des données de localisation en temps réel de l'astre,
- sélectionner, dans la base de données, un enregistrement d'astre,
- piloter le moteur en fonction de la matrice associée à l'enregistrement sélectionné,
- orienter automatiquement l'appareil vers la localisation de l'astre, en fonction des données de localisation associées à l'enregistrement sélectionné.

Selon un autre aspect avantageux de l'invention, le procédé comprend les étapes consistant à :
- acquérir une image d'un astre observé dans une scène d'observation, laquelle acquisition est réalisée au moyen d'une des matrices sélectionnée en fonction de la nature dudit astre,
- exécuter un processus informatique configuré pour détecter le déplacement d'un autre astre dans la scène d'observation,
- sélectionner l'autre matrice,
- piloter le moteur en fonction de l'autre matrice sélectionnée.

Selon un autre aspect avantageux de l'invention, le procédé comprend les étapes consistant à :
- enregistrer, dans une base de données, des enregistrements d'astres, chaque enregistrement étant associé à une des matrices et à au moins un élément caractéristique de l'astre,
- acquérir une image d'un astre, laquelle acquisition est réalisée au moyen d'une des matrices,
- exécuter un processus informatique de reconnaissance configuré pour détecter, dans l'image acquise, au moins un élément caractéristique dudit astre,
- identifier, dans la base de données, un enregistrement d'astre associé à un élément caractéristique similaire à celui détecté,
- sélectionner la matrice associée à l'enregistrement identifié,
- si la matrice ayant acquise l'image ne correspond pas à la matrice sélectionnée, alors piloter le moteur en fonction de ladite matrice sélectionnée.

Un autre aspect de l'invention concerne un appareil pour l'acquisition d'image d'un astre, comportant :
- un corps creux à l'intérieur duquel pénètrent, en usage, des rayons lumineux provenant d'un astre observé, ledit astre observé étant choisi parmi au moins un premier astre d'une première nature et un deuxième astre d'une deuxième nature, la nature du premier astre étant différente de la nature du deuxième astre,
- un système optique agencé dans le corps creux et présentant un axe optique, lequel système est configuré de sorte que les rayons lumineux forment, dans un foyer image situé dans un plan focal, une image de l'astre observé.

L'appareil est remarquable en ce qu'il comporte :
- au moins une première et une deuxième matrices de capteurs optiques, comportant chacun une pluralité de pixels, configurés pour acquérir l'image, respectivement du premier astre et du deuxième astre, formée dans le foyer image, lesquelles matrices présentent respectivement des pixels de taille différente l'une de l'autre,
- un dispositif de sélection de matrices adapté pour placer une des deux matrices dans le foyer image, l'autre matrice restant en dehors dudit foyer image, de sorte que l'astre observé est le premier astre de première nature ou le deuxième astre de deuxième nature.

Dans le cadre de la présente invention, le fait que les deux matrices de capteurs optiques présentent des pixels de taille différente n'exclut pas qu'au sein d'une même matrice - par exemple la première ou la deuxième matrice - les pixels ne présentent pas une taille identique.

Dans ce cas, on considère la taille moyenne des pixels d'une matrice comme définissant la taille des pixels et l'expression « taille moyenne » est définie comme signifiant les différentes tailles de pixels, présentes dans la matrice considérée, pondérées de leur nombre dans la matrice. A titre d'exemple, si l'on considère qu'une matrice comprend dix pixels dont cinq pixels d'une taille z₁ et cinq pixels d'une taille z₂, alors la taille moyenne des pixels de la matrice est égale à : [z₁ × (5/10)] + [z₂ × (5/10)].

D'autres caractéristiques avantageuses de l'appareil objet de l'invention sont listées ci-dessous. Chacune de ces caractéristiques peut être considérée seule ou en combinaison avec les caractéristiques remarquables définies ci-dessus. Chacune de ces caractéristiques contribue, le cas échéant, à la résolution de problèmes techniques spécifiques définis plus avant dans la description et auxquels ne participent pas nécessairement les caractéristiques remarquables définies ci-dessus. Ces dernières peuvent faire l'objet, le cas échéant, d'une ou plusieurs demandes de brevet divisionnaires :
Selon un aspect particulièrement intéressant de l'invention, la première matrice et la deuxième matrice ont des tailles différentes.

Dans son acceptation la plus large, la présente invention est définie par une première matrice de capteurs optiques présentant des pixels de taille différente de celle des pixels de la deuxième matrice.

Toutefois, compte tenu de la spécifié de l'observation optique prévue dans le cadre de la présente invention, une gamme de taille de pixels peut être définie, quel que soit le nombre de natures d'astre à observer, et donc de matrices de capteurs optiques correspondantes. De la même manière, on peut définir une gamme de nombre de pixels par matrice ainsi qu'une gamme de taille des matrices.

Ainsi, avantageusement, la taille des pixels des (première et deuxième) matrices de capteurs optiques est comprise entre 0,1 µm et 20 µm, de préférence comprise entre 0,5 µm et 10 µm. On entend par le terme de « taille », en lien avec un pixel, le fait qu'un côté d'un pixel - classiquement de forme carré - présente la taille définie.

Avantageusement, le nombre des pixels dans les (première et deuxième) matrices de capteurs optiques est compris entre 105 pixels (cent mille pixels) et 109 pixels (un milliard de pixels), de préférence entre 106 (un million) et 108 (cent millions) de pixels.

Avantageusement, la taille des (première et deuxième) matrices est comprise entre 1 millimètre carré (mm2) et 1000 mm2, de préférence entre 5 et 150 mm2.

Selon une possibilité offerte par l'invention, le foyer image est fixe et les matrices sont mobiles.

Avantageusement, les matrices sont fixées sur un support qui est mobile entre :
- une première position dans laquelle la première matrice est placée dans le foyer image, et dans laquelle la deuxième matrice est placée en dehors dudit foyer image,
- une deuxième position dans laquelle la deuxième matrice est placée dans le foyer image, et dans laquelle la première matrice est placée en dehors dudit foyer image.

Avantageusement, le support est mobile en rotation ou mobile en translation.

Selon une autre possibilité offerte par l'invention, les matrices sont fixes et le foyer image est mobile.

Avantageusement, le système optique comporte un élément optique qui est mobile de manière à faire varier la position du foyer image.

Selon un aspect de l'invention, l'élément optique est mobile entre :
- une première position dans laquelle le foyer image est ramené au niveau de la première matrice,
- une deuxième position dans laquelle le foyer image est ramené au niveau de la deuxième matrice.

Avantageusement, le système optique comporte :
- un miroir primaire positionné dans le corps creux, pour réfléchir les rayons lumineux pénétrant dans ledit corps,
- un miroir secondaire positionné dans le corps creux pour réfléchir les rayons lumineux réfléchis par le miroir primaire, lequel miroir secondaire est adapté pour ramener le plan focal derrière le miroir primaire,
- les matrices sont agencées derrière le miroir primaire.
- Selon un mode de réalisation, l'appareil se présente sous la forme d'un télescope.

### Brève description des figures.

D'autres avantages et caractéristiques de l'invention apparaîtront mieux à la lecture de la description d'un mode de réalisation préféré qui va suivre, en référence aux dessins annexés, réalisés à titre d'exemples indicatifs et non limitatifs et sur lesquels :
[Fig. 1a] est une vue en coupe schématisant un appareil de capture d'image selon l'invention, comportant des matrices de capteurs interchangeables selon un premier mode de réalisation, dans une première position d'observation.
[Fig. 1b] montre l'appareil de la figure 1a, dans une seconde position d'observation.
[Fig. 2] schématise un support mobile, vue de face, sur lequel sont installées les matrices de capteurs interchangeables, selon un premier mode de réalisation.
[Fig. 3a] est une vue en coupe schématisant un appareil de capture d'image selon l'invention, comportant des matrices de capteurs interchangeables selon un deuxième mode de réalisation, dans une première position d'observation.
[Fig. 3b] montre l'appareil de la figure 3a, dans une seconde position d'observation.
[Fig. 4a] est une vue en coupe schématisant un appareil de capture d'image selon l'invention, comportant des matrices de capteurs interchangeables selon un troisième mode de réalisation, dans une première position d'observation.
[Fig. 4b] montre l'appareil de la figure 4a, dans une seconde position d'observation.
[Fig. 5a] est une vue en coupe schématisant un appareil de capture d'image selon l'invention, comportant des matrices de capteurs interchangeables selon un quatrième mode de réalisation, dans une première position d'observation.
[Fig. 5b] montre l'appareil de la figure 5a, dans une seconde position d'observation.
[Fig. 6] est une vue en coupe schématisant un appareil de capture d'image selon l'invention, comportant des matrices de capteurs interchangeables selon un cinquième mode de réalisation, dans une position d'observation.
[Fig. 7] est une vue en coupe schématisant un appareil de capture d'image selon l'invention, comportant des matrices de capteurs interchangeables selon un sixième mode de réalisation, dans une position d'observation.
[Fig. 8] est une vue en coupe schématisant un appareil de capture d'image selon l'invention, comportant des matrices de capteurs interchangeables selon un septième mode de réalisation, dans une position d'observation.
[Fig. 9] est une vue en coupe schématisant un appareil de capture d'image selon l'invention, comportant des matrices de capteurs interchangeables selon un huitième mode de réalisation, dans une position d'observation.
[Fig. 10] est une vue en coupe schématisant un appareil de capture d'image selon l'invention, comportant des matrices de capteurs interchangeables selon un neuvième mode de réalisation, dans une position d'observation.

### Description des modes de réalisation.

Par souci de clarté, la présente invention fait référence à un ou plusieurs « *processus informatiques* ». Ces derniers correspondent aux actions ou résultats obtenus par l'exécution d'instructions de différentes applications informatiques. Aussi, il faut également comprendre au sens de l'invention que « *un processus informatique est adapté pour faire quelque chose* » signifie « *les instructions d'une application informatique exécutées par une unité de traitement font quelque chose* ».

Tel qu'utilisé ici, sauf indication contraire, l'utilisation des adjectifs ordinaux « *premier* », « *deuxième* », etc., pour décrire un objet indique simplement que différentes occurrences d'objets similaires sont mentionnées et n'implique pas que les objets ainsi décrits doivent être dans une séquence donnée, que ce soit dans le temps, dans l'espace, dans un classement ou de toute autre manière.

L'appareil 30 objet de l'invention est utilisé pour l'observation à la fois d'astres de grande taille et d'astres de petite taille. Ces astres ou objets ou corps célestes peuvent être des planètes, des étoiles, des nébuleuses, des galaxies, etc. Il s'agit préférentiellement d'un télescope mais l'appareil peut également se présenter sous la forme d'un appareil photographique ou d'une caméra vidéo. Par souci de clarté, et à titre d'exemple illustratif seulement, la suite de la description fait seulement référence à un télescope adapté pour l'observation d'astres de nature différente, notamment des astres de petite taille 50 relativement lumineux (ex : planètes, lune) et des astres de grande taille 51 plus sombres (ex : nébuleuses, galaxies).

Sur les figures annexées, le télescope 30 comprend notamment un corps creux 302 à l'intérieur duquel pénètrent, en usage, des rayons lumineux 34 provenant de l'astre 50, 51 observé. Le corps creux 302 présente une première 300 extrémité par laquelle pénètrent les rayons lumineux 34 et une seconde extrémité 301 opposée à ladite première extrémité

Le corps creux 302 se présente préférentiellement sous la forme d'un tube creux de section circulaire, mais pourrait être un tube de section ovale, carrée octogonale ou autre. Il est précisé que le corps creux 302 n'est pas nécessairement de forme tubulaire, mais peut être de forme conique, ou formé de portions de tubes ou de cônes par exemple. Le corps creux 302 peut être réalisé en matériau plastique, en matériau composite, etc. A titre d'exemple, sa longueur est comprise entre 200 mm et 400 mm, son diamètre est compris entre 50 mm et 500 mm et son épaisseur est comprise entre 1 mm et 10 mm.

Un système optique 31, 382, 383 est agencé dans le corps creux 302 possédant un axe optique 32. Le système optique est configuré de sorte que les rayons lumineux 34 forment, dans un plan focal 33, une image de l'astre 50, 51 observé.

Le télescope présente un axe optique 32. Au sens de la présente invention, on entend par axe optique, la ligne qui passe par le centre de chaque élément optique du système optique 31, 382, 383. L'axe optique 32 est un axe rectiligne confondu avec l'axe de symétrie du télescope 30(comme par exemple dans les premier, deuxième, cinquième, septième, huitième et neuvième modes de réalisation). D'autres configurations sont toutefois envisageables, dans lesquelles l'axe optique 32 est non rectiligne et se décompose en un axe optique principal (confondu avec l'axe de symétrie) et par un axe optique secondaire (entre un miroir mobile 381 et une matrice de capteurs 361, 362, 363), ce type de configuration est par exemple représenté aux troisième, quatrième et sixième modes de réalisation.

Le télescope présente un foyer image 330 à l'intersection entre l'axe optique 32 et les rayons lumineux 34. Préférentiellement, le foyer image 330 est dans le plan focal 33.

Dans le corps creux 302, sont agencées au moins deux matrices de capteurs optiques 361, 362 configurés pour acquérir l'image de l'astre 50, 51 observé, formée dans le foyer image 330. Il est également possible d'envisager trois matrices de capteurs optiques (comme représenté à la figure 9) ou plus, permettant d'obtenir une gamme plus large de résolution de manière à ce que l'utilisateur puisse observer une plus grande catégorie d'astres (par exemple des astres de tailles intermédiaires, ou des astres très grands comme la Galaxie d'Andromède) mais également d'affiner la résolution en fonction de la nature de l'astre observé.

La première matrice 361 et la deuxième matrice 362 ont des conceptions différentes de manière à être adaptées à l'observation d'astres 50, 51 de nature différentes.

Les matrices 361, 362 sont par exemple des matrices de capteurs CCD (pour l'acronyme anglais Charged Coupled Device) ou CMOS (pour l'acronyme anglais Complementary Métal Oxide Semiconductor), ce type de matrice ayant des dimensions réduites, ce qui permet de les installer aisément dans l'appareil 30. Elles sont constituées d'un arrangement de capteurs optiques, chaque capteur se présentant sous la forme d'un pixel. Ces pixels présentent des tailles et des résolutions différentes en fonction de la matrice 361, 362 dans laquelle ils sont installés. Chaque type de matrice est adapté à un type d'astre à observer. Les matrices se caractérisent par leur taille, la taille des pixels, et le nombre de pixels. La taille de la matrice influe sur le champ de vue. La taille des pixels et leur nombre influent sur la résolution et sur la sensibilité.

C'est la taille de la matrice qui détermine le champ de vue. En effet, plus la matrice est grande, plus la portion de ciel observée est large. Il sera donc possible d'observer des astres étendus comme des nébuleuses ou des astres du ciel profond. A l'inverse, avec une matrice plus petite, la portion de ciel observée sera davantage réduite. Le champ de vue étant restreint, on peut observer seulement des astres plus petits tels que des planètes.

Dans la suite de la description, la première matrice 361 est considérée comme présentant la plus grande taille et convient à l'observation d'astres de grande taille 51. Sa surface est par exemple comprise entre 50 mm² et 150 mm². La deuxième matrice 362 est considérée comme présentant la plus petite taille et convient à l'observation d'astres de petite taille 50. Sa surface est par exemple comprise entre 5 mm² et 15 mm². Ces matrices 361, 362 particulièrement compactes permettent de facilement les intégrées dans le corps creux 302.

La résolution optique du télescope 30 est généralement définie par la dimension du miroir ou de la lentille du système optique 31. La taille des pixels de la matrice de capteurs détermine la résolution numérique de l'image observée et indirectement la possibilité de zoomer. En effet, plus la taille des pixels diminue, plus la résolution numérique augmente. Et en augmentant la résolution numérique, il est possible de réaliser un agrandissement de bonne qualité d'une partie de l'image observée. A l'inverse, si la résolution numérique est basse, l'agrandissement sera de qualité médiocre. La résolution du télescope numérique est déterminée par l'élément le moins résolu entre l'optique et la matrice de capteur. Il n'est donc pas intéressant d'utiliser une taille de pixels plus petite que la résolution optique du télescope 30.

La taille des pixels a également une incidence sur la sensibilité à la lumière. Des pixels de petite taille sont peu sensibles. A l'inverse, des pixels de grande taille sont plus sensibles. Si l'utilisateur observe un astre de petite taille 50, comme une planète par exemple qui est très lumineuse, il n'est pas nécessaire d'avoir une forte sensibilité. L'observation des astres de petite taille 50 peut donc se faire avec des pixels de petite taille ayant une faible sensibilité de sorte que l'on se concentre sur la résolution numérique qui permet d'observer des détails de la surface de la planète (ex : tempêtes, cratères, etc). A l'inverse, si l'utilisateur observe un astre de grande taille 51, comme une nébuleuse par exemple qui est peu lumineuse, il est avantageux d'avoir une forte sensibilité à la lumière. Ces astres étant de grande taille, il n'est pas nécessaire d'avoir une très haute résolution pour y observer des détails (nuages de gaz, bras de galaxies).

Selon un mode de réalisation, les pixels de petite taille ont par exemple des côtés ayant une longueur comprise entre 0,5 µm et 2 µm. Les pixels de grande taille ont par exemple des côtés ayant une longueur comprise entre 2 µm et 10 µm.

Chaque matrice 361, 362 est préférentiellement un capteur CCD (pour l'acronyme anglais Charged Coupled Device) ou CMOS (pour l'acronyme anglais Complementary Métal Oxide Semiconductor) comportant un agencement de pixels (préférentiellement en générant des images couleur). Ce type de matrice a des dimensions réduites, ce qui permet de l'installer aisément

La première matrice 361 comprend des pixels de grande taille et la deuxième matrice 362 des pixels de petite taille. Le télescope 30 permet donc à lui seul, une observation optimale à la fois des astres de petite taille 50 lumineux pour lesquels une bonne résolution numérique est souhaitée et des astres de grande taille 51 plus sombres pour lesquels une bonne sensibilité à la lumière est souhaitée.

Les capteurs optiques des matrices 361, 362, sont des composants photosensibles permettant de générer des données (ou signaux électriques) issues de l'acquisition de l'image de l'astre 50, 51 dans le foyer image 330. Les signaux électriques générés par les capteurs optiques sont transmis à une unité électronique de traitement 39 de l'image. La connexion entre les matrices 361, 362 et l'unité 39 peut être réalisée de manière filaire ou sans fil, par exemple selon un protocole de communication de proximité, tel qu'à titre d'exemples non limitatifs, **le** protocole Bluetooth^{®}, Wifi^{®}, Zigbee^{®}. La première matrice 361 et la deuxième matrice 362 sont toutes deux reliées à la même unité 39 et les données issues des deux dites matrices sont observées sur un même écran 40.

L'unité 39 comprend un calculateur se présentant sous la forme d'un processeur, microprocesseur ou CPU (pour Central Processing Unit), une mémoire et de manière générale les ressources informatiques permettant d'assurer le traitement des signaux électriques reçus des matrices 361, 362 pour la formation d'une image numérique de l'astre. Ces composants sont préférentiellement montés sur une carte électronique qui permet de regrouper en un seul endroit, et sur un seul support, tous les composants électroniques de l'unité 39. Cette conception permet de minimiser le nombre de cartes électroniques intégrées dans le télescope 30, et de réduire le nombre de câblages. En outre la fabrication de l'unité 39, son installation dans le télescope 30 et, le cas échéant, sa maintenance s'en trouvent grandement facilités.

L'image numérique générée par l'unité 39 est affichée sur un écran 40. L'écran 40 peut être fixé sur la carte électronique, de manière à ce que l'unité 39 et ledit écran forment un ensemble monobloc facilement manipulable. Dans ce cas, on utilise avantageusement un écran plat, par exemple un écran polychrome à cristaux liquides LCD (pour Liquid Crystal Display) ou OLED (pour Organic Light-Emitting Diode).

Selon un autre mode de réalisation, l'écran 40 est disjoint de l'unité 39 et la carte électronique. Il est physiquement distant du corps creux 302. Dans ce mode de réalisation, l'écran 40 peut être celui d'un terminal mobile de l'utilisateur, par exemple l'écran d'un Smartphone (téléphone intelligent) ou d'une tablette tactile. La connexion entre l'unité 39 et l'écran 40 peut être réalisée via une liaison filaire (par exemple au moyen d'un câble USB) ou via une liaison sans fil, par exemple selon un protocole de communication de proximité, tel qu'à titre d'exemple non limitatif, le protocole Bluetooth^{®}, Wifi^{®}, ZigBee^{®}. Ce mode de réalisation permet d'augmenter la compacité du télescope 30 puisque l'encombrement de l'écran 40 n'est pas pris en compte.

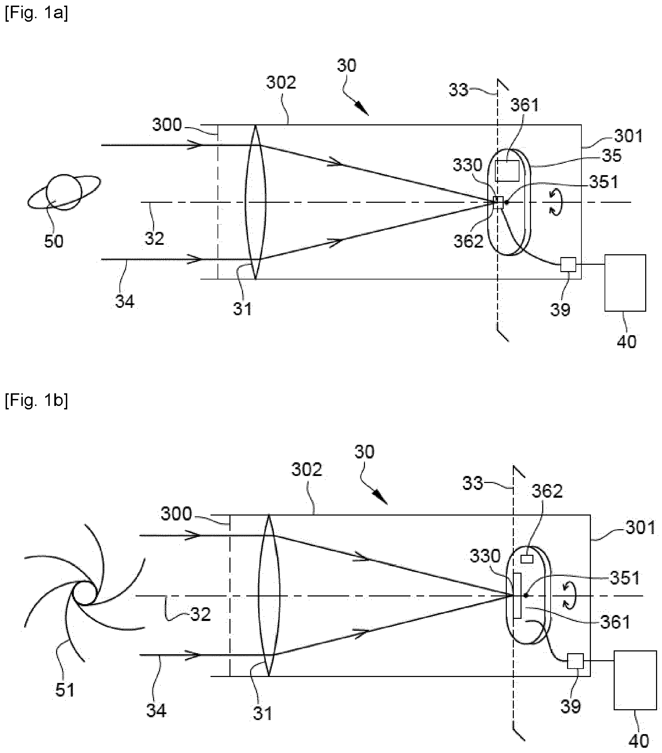

### Premier mode de réalisation (figures 1a et 1b).

Dans ce mode de réalisation, le foyer image 330 est fixe et les matrices 361, 362 sont mobiles en rotation. Le foyer image 330 est ici perpendiculaire à l'axe de symétrie du corps creux 302, lequel axe coïncide avec l'axe optique 32.

Sur les figures 1a et 1b, le système optique comprend une lentille 31 disposée à l'intérieur du corps creux 302 et centrée sur l'axe optique 32. Les rayons lumineux 34 sont réfractés par la lentille 31 pour former, dans le foyer image 330, une image de l'astre 50, 51 observé. La forme et les dimensions de ladite lentille sont adaptées à celles du corps creux 302. Le fonctionnement du télescope 30 est identique à celui décrit en référence au premier mode de réalisation.

La première matrice 361 et la deuxième matrice 362 sont fixées sur un support mobile 35 installé dans le corps creux 302, à proximité de la seconde extrémité 301.

Le support mobile 35 est par exemple réalisé en acier, en carbone, ou dans un matériau plastique, de sorte que sa conception soit simple, peu onéreuse et qu'il soit durable dans le temps. Le support mobile 35 est préférentiellement de forme circulaire mais peut également être de forme carrée, octogonale, ovale, etc. De manière générale, la forme et les dimensions du support mobile 35 sont adaptées aux dimensions des matrices 361, 362. A titre d'exemple, sa surface est comprise entre 2 cm² et 8 cm². Ces dimensions réduites permettent d'utiliser un minimum d'espace dans l'appareil 30.

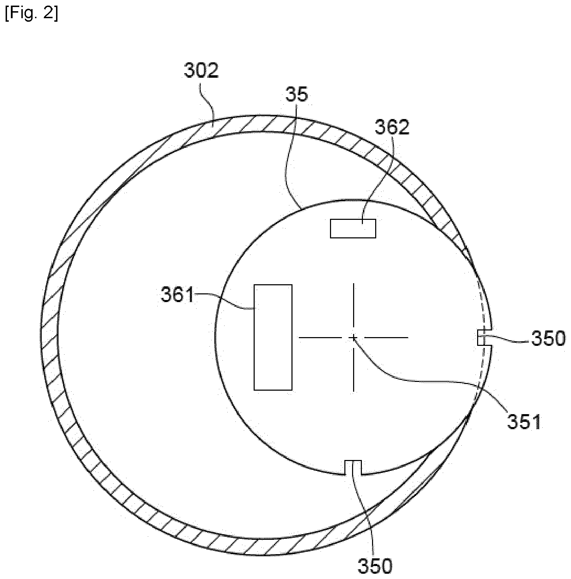

Le support mobile 35 représenté à la figure 2 se présente sous la forme d'une roue mobile en rotation autour d'un axe de rotation 351. Ce dernier est dans le plan focal 33 et perpendiculaire à l'axe optique 32. La roue peut être circulaire, ovale, carrée, rectangulaire, etc. Le support mobile 35 présente au moins deux aménagements pour loger les matrices 361, 362.

La position du support 35 pour l'observation d'un astre de petite taille 50 est illustrée sur la figure 1a et celle pour l'observation d'un astre de grande taille 51 est illustrée sur la figure 1b.

Lorsque l'utilisateur observe un astre de petite taille 50, le support mobile 35 est disposé de telle sorte que la deuxième matrice 362 soit placée dans le foyer image 330 (on entend au sens de la présente invention que sa face photosensible est dans le foyer image). La première matrice 361 reste placée dans le plan focal 33 mais en dehors du foyer image 330. La deuxième matrice 362 est dite « active » et la première matrice 361 « inactive ».

Lorsque l'utilisateur observe un astre de grande taille 51, le support mobile 35 est disposé de telle sorte que la première matrice 361 soit placée dans le foyer image 330 (la première matrice est active). La deuxième matrice 362 reste placée dans le plan focal 33 mais en dehors du foyer image 330 (la deuxième matrice est inactive). L'activation de la matrice 361, 362 sélectionnée, par le support mobile 35, est ainsi réalisée en fonction de la nature de l'astre 50, 51 observé.

L'activation de la matrice sélectionnée 361 ou 362, est réalisée en faisant pivoter le support 35 autour de son axe de rotation 351. Le support 35 est donc mobile entre au moins deux positions : une première position où la première matrice 361 est active et une deuxième position où la deuxième matrice 362 est active. Le support mobile 35 peut également présenter une troisième et/ou une quatrième position en fonction du nombre de matrices utilisées.

Selon un mode de réalisation, l'activation de la matrice sélectionnée 361 ou 362 se fait manuellement par l'utilisateur qui fait pivoter le support mobile 35 dans la position désirée. Sur la figure 2, le support mobile 35 est inséré dans l'appareil 30 avec une partie accessible qui dépasse du corps creux 302. En manipulant cette partie accessible, l'utilisateur peut ainsi faire pivoter manuellement le support 35, dans le sens horaire ou antihoraire, de manière à activer l'une ou l'autre des matrices 361, 362. Pour faciliter cette mise en rotation, le support 35 se présente avantageusement sous la forme d'une molette. Afin que l'utilisateur puisse savoir quelle matrice 361, 362 est utilisée, le support mobile 35 présente avantageusement un système de repères 350 sur son pourtour, comme illustré sur la figure 2. Les repères peuvent par exemple se présenter sous la forme de crans de diverses tailles ou de marquage (couleurs, chiffres...), etc.

Selon un autre mode de réalisation, le support mobile 35 est motorisé au moyen d'un moteur et peut, dans ce cas, être entièrement intégré dans l'appareil 30. Le moteur du support mobile 35 est par exemple connecté à l'unité de traitement 39. Celle-ci pilote le moteur pour déplacer le support mobile 35 dans la première position ou dans la deuxième position, en fonction de la matrice à activer. Le changement de position du support mobile 35 est alors réalisé semi-automatiquement, par exemple suite à l'activation d'un ou plusieurs boutons aménagés sur l'appareil 30 et connectés à l'unité de traitement 39.

Le pilotage du moteur du support mobile 35 peut également se faire en transmettant à l'unité de traitement 39, des instructions de commande émises depuis un Smartphone (téléphone intelligent) de l'utilisateur. Ces instructions sont par exemple émises suite à l'activation d'une ou plusieurs touches dédiées affichée sur une interface graphique du Smartphone. Dans ce cas, le Smartphone est adapté pour communiquer avec l'unité de traitement 39 et lui transmettre les instructions de commande, par exemple via une connexion Wifi^{®} ou Bluetooth^{®}. A la réception de ces instructions de commande, l'unité de traitement 39 pilote le moteur du support mobile 35 pour activer la matrice sélectionnée 361 ou 362.

Selon encore un autre mode de réalisation, le pilotage du moteur du support mobile 35 se fait de manière automatique. La matrice sélectionnée 361 ou 362 est alors activée sans que l'utilisateur n'ait à intervenir. Différents cas d'activation automatique peuvent se présenter. Les cas présentés ci-dessous ne sont pas limitatifs de l'invention, d'autres utilisations pouvant être envisagées.

Dans un premier cas, l'utilisateur pointe son télescope 30 vers un champ d'observation de la voûte céleste. L'unité de traitement 39 est connectée à une base de données dans laquelle sont enregistrés les astres principaux et connus de l'homme du métier. Cette base de données peut être intégrée dans le télescope 30. Dans une variante de réalisation, la base de données est distante du télescope 30, par exemple hébergée dans un serveur distant auquel est connectée l'unité de traitement 39. La connexion de l'unité 39 à la base de données peut dans ce cas être réalisée au travers d'un réseau de communication de type interne, 3G, 4G, 5G, etc.

Chaque enregistrement d'astre est associé, dans la base de données, à la matrice 361, 362 convenant le mieux à l'observation dudit astre, par exemple en fonction de sa taille, de sa luminosité et/ou d'une résolution numérique optimale. Chaque enregistrement est en outre préférentiellement associé :
- à un ou plusieurs éléments caractéristiques de l'astre correspondant, par exemple à sa taille, son motif, sa luminosité, etc ; et/ou
- à des données de localisation (ou coordonnées célestes) dudit astre, en temps réel.

L'utilisateur sélectionne un enregistrement d'astre dans la base de données et le télescope 30 va lui-même pointer vers ledit astre. L'unité de traitement 39 relève une donnée temporelle t correspondant à la période d'acquisition, c'est-à-dire au moment où l'utilisateur sélectionne l'enregistrement dans la base de données. L'unité de traitement 39 recherche ensuite dans la base de données les coordonnées célestes de l'astre à l'instant t. Grâce à une corrélation des données de localisation terrestre du télescope 30, par exemple au moyen d'un GPS (pour « Global Positioning System » ou assistant de navigation en français) et des données d'orientation dudit télescope, par exemple au moyen d'un accéléromètre, l'unité de traitement 39 actionne un dispositif motorisé embarqué permettant d'orienter automatiquement ledit télescope vers la localisation de l'astre 50, 51 sélectionné. L'unité de traitement 39 pilote en outre le moteur pour déplacer le support 35 dans la position permettant d'activer la matrice associée à l'enregistrement sélectionné et qui convient le mieux pour l'observation de cet astre. L'image peut alors être acquise de manière optimale.

Dans un deuxième cas, l'utilisateur observe un astre et acquiert son image avec activation de la matrice 361, 362 optimale pour l'observation de cet astre. Un autre astre se déplace dans le champ de vue (ou scène d'observation). L'utilisateur observe par exemple un astre de petite taille 50 (une planète) avec la deuxième matrice 362 active. Un astéroïde passe alors dans le champ de vue. L'unité de traitement 39 exécute un processus informatique configuré pour détecter se passage de l'autre astre dans la scène d'observation. Ce processus est par exemple basé sur une détection de mouvement. Il peut alors être avantageux de dézoomer pour élargir la scène d'observation et observer plus longuement l'astéroïde. La première matrice 361 est alors sélectionnée. L'unité de traitement 39 va alors piloter le moteur pour déplacer le support 35 dans la position permettant d'activer la première matrice 361 et désactiver la deuxième matrice 362. Ce changement automatique de matrice peut également être réalisé lorsque l'utilisateur observe initialement un astre de grande taille 51 (avec la première matrice 361 active) et qu'il est avantageux de zoomer pour restreindre la scène d'observation (activation de la deuxième matrice 362).

Dans un troisième cas, lorsque l'utilisateur pointe son télescope 30 vers un astre 50, 51 particulier, l'une des matrices 361, 362 acquiert l'image dudit astre. L'image acquise est ensuite analysée par l'unité de traitement 39. Cette analyse est réalisée en exécutant un processus informatique de reconnaissance configuré pour détecter au moins un élément caractéristique, par exemple en mettant en oeuvre une analyse par seuillage. En cas de besoin, l'homme du métier pourra notamment se référer aux documents brevets FR3054897 et/ou US2019196173 pour davantage de détails sur un tel processus informatique de reconnaissance. Une fois l'élément caractéristique particulier détecté, l'unité de traitement 39 identifie, dans **la** base de données, un enregistrement d'astre associé à un élément caractéristique similaire à celui détecté. Dès qu'un élément caractéristique similaire est détecté, l'enregistrement de l'astre correspondant est identifié ainsi que la matrice 361, 362 associée à cet enregistrement.

L'unité de traitement 39 sélectionne la matrice associée à l'enregistrement et transmet une instruction de commande au moteur du support mobile 35 pour activer ladite matrice correspondante. Si la matrice 361, 362 ayant acquis l'image est la bonne, celle-ci reste active et le support 35 ne bouge pas. A l'inverse, si la matrice 361, 362 ayant acquis l'image n'est pas la bonne, alors l'unité de traitement 39 pilote le moteur pour déplacer le support 35 dans la position permettant d'activer l'autre matrice. L'image peut alors être acquise de manière optimale.

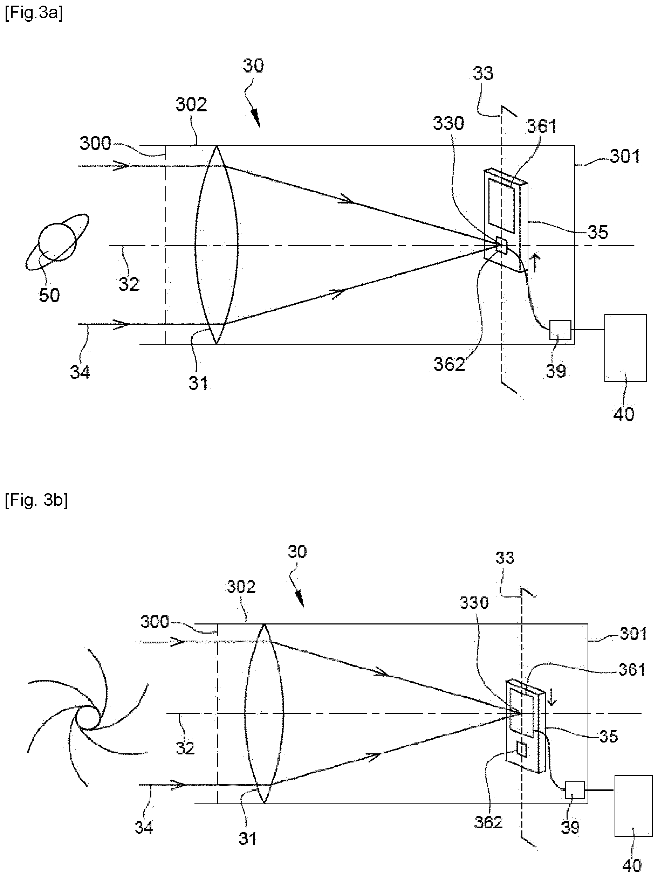

### Deuxième mode de réalisation (figures 3a et 3b).

Dans ce mode de réalisation, le foyer image 330 est fixe et les matrices 361, 362 sont mobiles en translation.

Le support mobile 35 se présente par exemple sous la forme d'une plaque ou d'un profilé sur lequel sont fixées les matrices 361, 362. Ces dernières sont agencées dans le plan focal 33. Le support mobile 35 est avantageusement monté sur une glissière de manière à guider son mouvement de translation.

L'activation de la matrice sélectionnée 361 ou 362, est réalisée en faisant translater le support 35 entre au moins deux positions :
- une première position dans laquelle la première matrice 361 est active (placée dans le foyer image 330) et la deuxième matrice 362 inactive (placée dans le plan focal 33 et en dehors du foyer image 330).
- une deuxième position dans laquelle la deuxième matrice 362 est active (placée dans le plan focal 33 et dans le foyer image 330) et la première matrice 361 inactive (placée dans le plan focal 33 et en dehors du foyer image 330).
Le support mobile 35 peut également présenter une ou plusieurs autres positions en fonction du nombre de matrices utilisées.

Comme décrit précédemment en référence au premier mode de réalisation, l'activation de la matrice sélectionnée 361 ou 362, peut se faire en déplaçant le support mobile 35 manuellement, ou en le déplaçant semi-automatiquement ou automatiquement en motorisant ledit support. Les modes de pilotage du moteur sont identiques à ceux décrits précédemment en référence au premier mode de réalisation.

Le fonctionnement de l'appareil 30 reste similaire à celui décrit précédemment en référence au premier mode de réalisation.

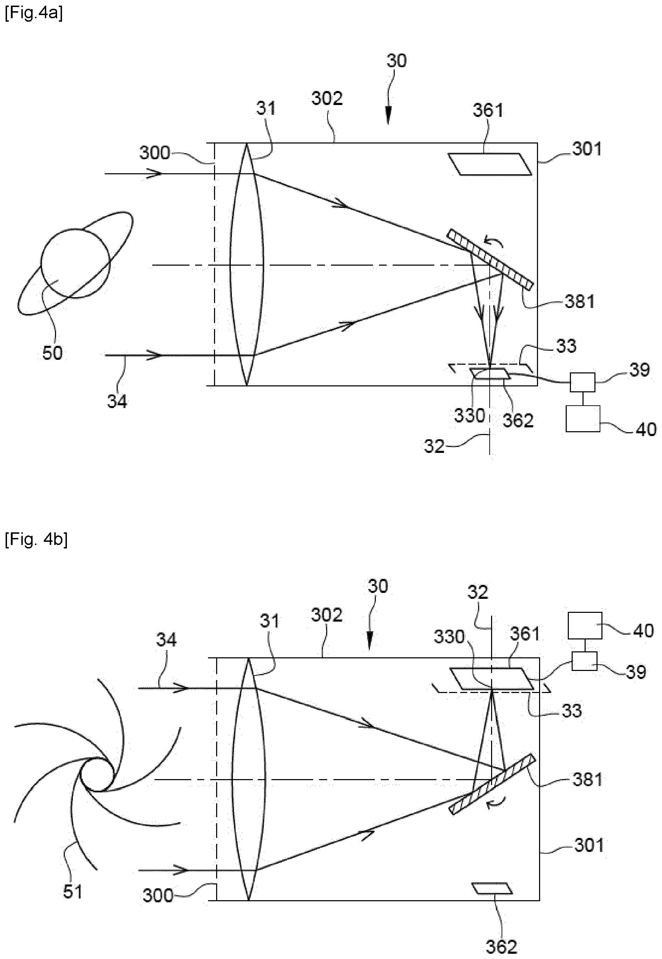

### Troisième mode de réalisation (figures 4a et 4b).

Dans ce mode de réalisation, le foyer image 330 est mobile et les matrices 361, 362 sont fixes.

Le système optique présente ici un élément optique mobile 381 adapté pour faire varier la position du foyer image 330. Sur les figures 4a et 4b, les matrices 361, 362 sont installées dans des positions fixes dans le corps creux 302, symétriquement par rapport à l'axe de symétrie dudit corps. En d'autres termes, les matrices 361, 362 sont chacune disposées d'un côté du corps creux 302.

L'élément optique mobile 381 se présente avantageusement sous **la** forme d'un miroir plan monté mobile en rotation autour d'un axe horizontal passant par le centre optique dudit miroir. En faisant varier l'inclinaison du miroir 381, on dévie les rayons lumineux 34 réfractés par la lentille 31, de sorte que le foyer image 330 est ramené au niveau de la première matrice 361 ou de la deuxième matrice 362.

Dans une première position d'inclinaison du miroir 381 (figure 4b), la première matrice 361 est active (placée dans le foyer image 330) et la deuxième matrice 362 inactive (placée en dehors du foyer image 330). Dans une deuxième position d'inclinaison du miroir 381 (figure 4a), la deuxième matrice 362 est active (placée dans le foyer image 330) et la première matrice 361 inactive (placée en dehors du foyer image 330). Le miroir 381 peut présenter une ou plusieurs autres positions d'inclinaison en fonction du nombre de matrices utilisées. C'est donc le déplacement de l'élément optique mobile 381 qui permet d'activer la matrice sélectionnée 361 ou 362.

De manière plus générale, pour activer la matrice sélectionnée, on déplace l'élément optique mobile 381 de sorte à ramener le foyer image 330 au niveau de ladite matrice.

Comme décrit précédemment en référence aux autres modes de réalisation, l'activation de la matrice sélectionnée 361 ou 362, peut se faire en déplaçant le miroir 381 manuellement, ou en le déplaçant semi-automatiquement ou automatiquement en motorisant ledit miroir. Les modes de pilotage du moteur sont identiques à ceux décrits précédemment en référence aux autres modes de réalisation.

Le fonctionnement de l'appareil 30 reste similaire à ceux décrits précédemment en référence aux autres modes de réalisation.

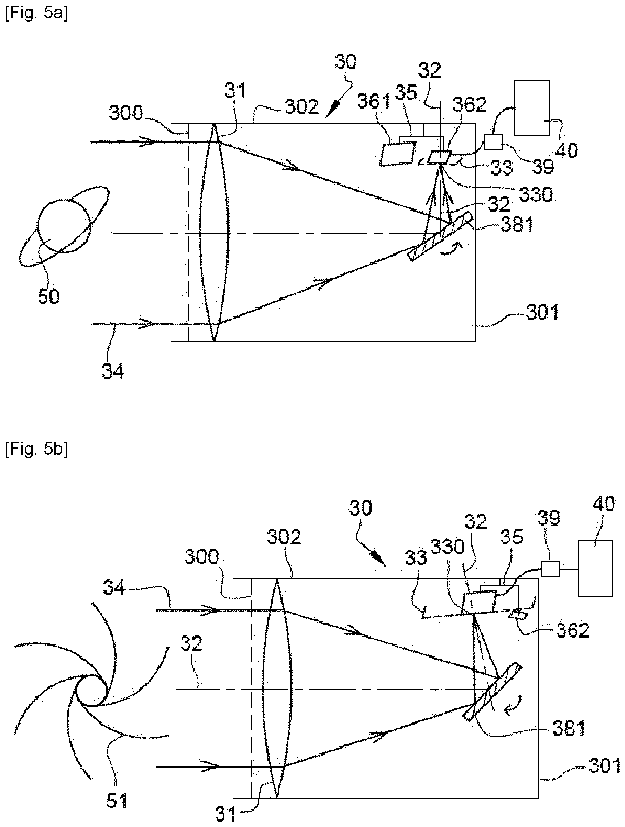

### Quatrième mode de réalisation (figure 5a et 5b).

Ce mode de réalisation est similaire au troisième mode de réalisation : le foyer image 330 est mobile et les matrices 361, 362 sont fixes. L'élément optique mobile 381 est adapté pour faire varier la position du foyer image 330.

Les matrices 361, 362 sont toutefois ici disposées du même côté du corps creux 302 et par exemple installées côte-à-côte, sur un support commun 35 fixe. Dans le troisième mode de réalisation, le miroir 381 doit pivoter de 90° entre les deux positions d'inclinaison.

Dans la configuration du quatrième mode de réalisation, le débattement angulaire du miroir 381 est moins important (par exemple quelques degrés) pour activer l'une ou l'autre des matrices 361, 362. L'activation des matrices est de ce fait plus rapide.

L'activation de la matrice sélectionnée 361 ou 362 et le fonctionnement de l'appareil 30 sont identiques à ceux décrits en référence au troisième mode de réalisation.

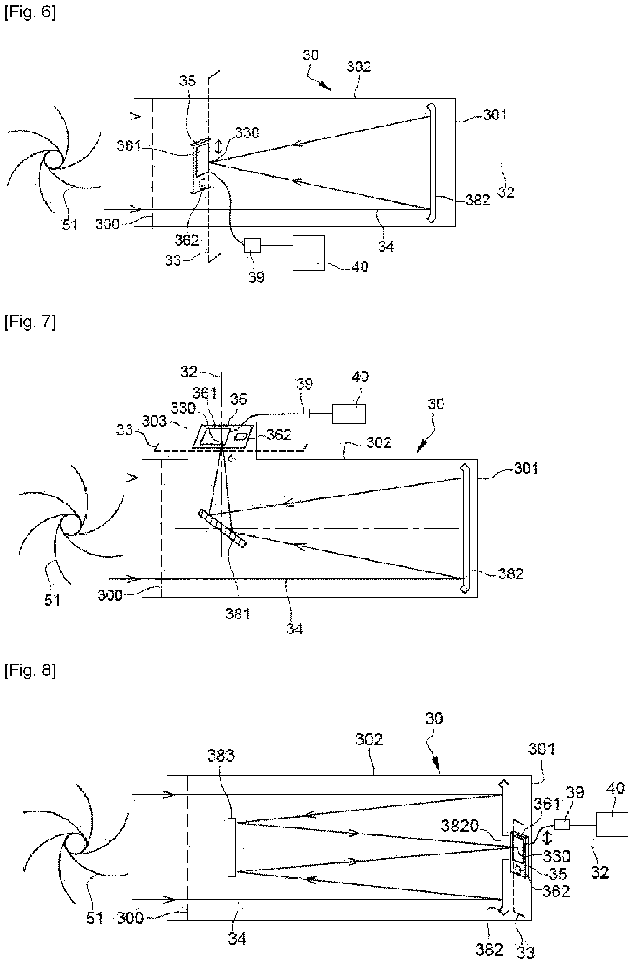

### Cinquième mode de réalisation (figure 6).

Ce mode de réalisation est similaire au deuxième mode de réalisation : le foyer image 330 est fixe et les matrices 361, 362 sont mobiles.

Le système optique comprend toutefois un miroir primaire 382 disposé dans le corps creux 302, du côté de la seconde extrémité 301. Ce miroir primaire 382 réfléchit et fait converger les rayons lumineux 34 vers le support mobile 35 placé dans le foyer image 330.

Le support mobile 35 sur lequel sont fixées les matrices 361, 362, est préférentiellement disposé dans le premier tiers du corps creux 302, du côté de la première extrémité 300 de manière à ne pas interférer avec les rayons lumineux tangents réfléchis par le miroir primaire 382.

Le support 35 peut être mobile en rotation ou mobile en translation. L'activation de la matrice sélectionnée 361 ou 362 et le fonctionnement de l'appareil 30 sont identiques à ceux décrits précédemment, et dans lesquels les matrices sont mobiles.

### Sixième mode de réalisation (figure 7).

Ce mode de réalisation est similaire au cinquième mode de réalisation. Le support mobile 35 est toutefois installé en dehors du corps creux 302, dans un aménagement 303 réalisé dans une paroi dudit corps.

Un miroir plan 381, fixe, dévie les rayons lumineux 34 réfléchis par le miroir primaire 382, de sorte que le foyer image 330 soit situé au niveau de l'aménagement. En déportant ainsi le support mobile 35 et les matrices 361, 362 hors du corps creux 302, on s'assure de ne pas occulter l'ouverture de la première extrémité 300 pour laisser pénétrer un maximum de rayons lumineux 34. Le support mobile 35 et les matrices 361, 362 n'interfèrent pas avec les rayons lumineux 34 de sorte qu'il n'y a pas de perte de luminosité.

Le support 35 peut être mobile en rotation ou mobile en translation. L'activation de la matrice sélectionnée 361 ou 362 et le fonctionnement de l'appareil 30 sont identiques à ceux décrits précédemment, et dans lesquels les matrices sont mobiles.

### Septième mode de réalisation (figure 8).

Dans ce mode de réalisation, le système optique comporte :
- un miroir primaire 382 positionné dans le corps creux 302, pour réfléchir les rayons lumineux 34 pénétrant dans ledit corps,
- un miroir secondaire 383 positionné dans le corps creux 302 pour réfléchir les rayons lumineux réfléchis par le miroir primaire 382.
Un tel système optique permet de réduire la longueur du corps creux 302, tout en gardant la même longueur focale d'un télescope comportant seulement un miroir primaire 382 (tel qu'illustré sur les figures 6 et 7 par exemple).

Le miroir primaire 382 et le miroir secondaire 383 sont sur l'axe optique 32 qui coïncide avec l'axe de symétrie dudit corps creux 302. Ces miroirs sont à réflexion pure.

Le miroir primaire 382 est préférentiellement un miroir parabolique concave ayant un rapport focal faible (préférentiellement inférieur à 5). Ce type de miroir permet de s'affranchir des aberrations sphériques. Le diamètre du miroir primaire 382 correspond sensiblement au diamètre interne du corps creux 302. Ce miroir primaire 382 présente en son centre une ouverture 3820 coaxiale à l'axe optique 32.

Le miroir primaire 382 est disposé à proximité de la seconde extrémité 301 du corps creux 302. Le miroir secondaire 34 est positionné dans le corps creux 302, au niveau de la première extrémité 300. L'installation du miroir secondaire 383 à l'intérieur du corps creux 302 permet de préserver son intégrité physique lors de la manutention et de la manipulation du télescope 30.

Le miroir secondaire 383 est adapté pour ramener le plan focal 33 derrière le miroir primaire 382, les rayons lumineux réfléchis passant au travers de l'ouverture 3820. Cette conception permet de diminuer la longueur focale et la longueur du corps creux 302 et, de fait, de réduire le rapport focal tout en conservant un miroir primaire 382 ayant un diamètre relativement élevé. Le télescope 30 est donc particulièrement léger et compact.

Le miroir secondaire 383 peut être concave ou convexe. Toutefois, on utilise préférentiellement un miroir plan. L'utilisation d'un miroir plan offre plusieurs avantages. Il permet de ramener par symétrie, le plan focal 33 derrière le miroir primaire 382 et, partant, la longueur focale du système optique. C'est également un miroir dont la conception est simple et peu onéreuse. Le coût global du télescope 30 s'en trouve donc réduit. De plus, l'alignement d'un miroir plan 383 avec le miroir primaire 382 est plus simple à réaliser, ce qui limite le temps de montage et les coûts de main d'oeuvre. L'utilisation d'un miroir plan permet encore d'utiliser un miroir secondaire dont le diamètre est nettement inférieur à celui du miroir primaire 382, de sorte que ledit miroir primaire occulte peu les rayons lumineux 34 pénétrant dans le corps creux 32.

Pour réduire la perte de luminosité et améliorer la résolution, un miroir secondaire 383 plan de plus petit diamètre est utilisé. Selon un mode avantageux de réalisation, le miroir secondaire 383 a un diamètre égal à la moitié du diamètre du miroir primaire 382. Ainsi, seule une faible partie de la surface du miroir primaire 382 et de la première extrémité 300 sont obstruées. Une quantité suffisante de lumière est alors susceptible de pénétrer dans le télescope 30 et être réfléchie par le miroir primaire 382 de sorte qu'un utilisateur peut correctement observer les astres de grande taille, peu lumineux. A titre d'exemple, le diamètre du miroir secondaire 383 est compris entre 25 mm et 250 mm pour un miroir primaire 382 ayant un diamètre compris entre 50 mm et 500 mm.

Les matrices 361, 362 sont disposées dans le foyer image 330, de sorte qu'elles n'interfèrent ni avec les rayons lumineux 34 réfléchis par le miroir primaire 382 et ni avec les rayons lumineux réfléchis par le miroir secondaire 383. On optimise ainsi la lumière collectée par la matrice active 361 ou 362, et on minimise la perte de résolution due à la présence du miroir secondaire 383. En outre, l'accès aux matrices 361, 362 est plus aisé de sorte que leur installation et/ou leur remplacement est plus rapide et plus facile, sans avoir à manipuler et/ou à dérégler le système optique 382, 383.

Sur la figure 8, le plan focal 33 et le foyer image 330 sont fixes et les matrices 361, 362 mobiles.

Le support 35 sur lequel sont fixées les matrices 361, 362, peut être mobile en rotation ou mobile en translation. L'activation de la matrice sélectionnée 361 ou 362 et le fonctionnement de l'appareil 30 sont identiques à ceux décrits précédemment, et dans lesquels les matrices sont mobiles.

Selon une autre variante de réalisation, le foyer image 330 est mobile et les matrices 361, 362 sont fixes. Une solution telle que décrite précédemment en références au troisième ou au quatrième mode de réalisation peut notamment être envisagée. Un élément optique mobile, de type miroir plan, est dans ce cas installé derrière le miroir primaire 382, pour faire varier la position du foyer image 330. En faisant varier l'inclinaison de cet élément optique mobile, on dévie les rayons lumineux réfléchis par le miroir secondaire 383, de sorte que le foyer image 330 soit situé au niveau de la première matrice 361 ou de la deuxième matrice 362. Ces dernières peuvent être disposées de manière opposée, comme dans le troisième mode de réalisation. L'activation de la matrice sélectionnée 361 ou 362 et le fonctionnement de l'appareil 30 sont alors identiques à ceux mentionnés précédemment en référence au troisième mode de réalisation. Les matrices 361 et 362 peuvent également être installées du même côté, comme dans le quatrième mode de réalisation. L'activation de la matrice sélectionnée 361 ou 362 et le fonctionnement de l'appareil 30 sont alors identiques à ceux mentionnés précédemment en référence au quatrième mode de réalisation.

### Huitième mode de réalisation (figure 9).

Ce mode de réalisation est similaire au deuxième mode de réalisation : le foyer image 330 est fixe et les matrices sont mobiles.

Le support mobile 35 comporte toutefois trois matrices distinctes. La troisième matrice 363 a une conception différente de la première matrice 361 et de la deuxième matrice 362. La troisième matrice 363 a une taille intermédiaire et convient à l'observation d'astres de grande taille (ex : nébuleuses) mais dont la taille est inférieure à d'autres astres plus grands tels que des galaxies (la première matrice 361 convenant mieux pour l'observation de ce type d'astre). Sa surface est par exemple comprise entre 1,5 mm² et 0,5 cm². Ses pixels ont par exemple des côtés ayant une longueur comprise entre 2 µm et 5 µm.

Le support 35 peut être mobile en rotation ou mobile en translation. L'activation de la matrice sélectionnée 361, 362 ou 363 et **le** fonctionnement de l'appareil 30 sont identiques à ceux décrits précédemment, et dans lesquels les matrices sont mobiles.

Selon une variante de réalisation, le foyer image 330 est mobile et les matrices 361, 362, 363 sont fixes. Un élément optique mobile du système optique est dans ce cas prévu pour faire varier la position du foyer image 330. L'activation de la matrice sélectionnée 361, 362 ou 363 et le fonctionnement de l'appareil 30 sont identiques à ceux mentionnés précédemment, et dans lesquels les matrices sont fixes.

### Neuvième mode de réalisation (figure 10).

Ce mode de réalisation est similaire au premier mode de réalisation : le foyer image 330 est fixe et les matrices 361, 362 sont mobiles en rotation.

Le support mobile 35 est ici mobile en rotation autour d'un axe de rotation 351 qui est parallèle au plan focal 33 et perpendiculaire à l'axe optique 32. Le support mobile 35 peut par exemple se présenter sous la forme d'un cylindre, d'un tambour, ou d'une autre forme. La matrice active est située dans le foyer image 330, dans le plan focal 33 et sur l'axe optique 32 tandis que la matrice inactive est située en dehors du plan focal et sur ledit axe optique.

L'activation de la matrice sélectionnée 361, 362 ou 363 et le fonctionnement de l'appareil 30 sont identiques à ceux mentionnés précédemment, et dans lesquels les matrices sont mobiles en rotation.

Une ou plusieurs caractéristiques exposées seulement dans un mode de réalisation peuvent être combinées avec une ou plusieurs autres caractéristiques exposées seulement dans un autre mode de réalisation.

L'agencement des différents éléments et/ou moyens et/ou étapes de l'invention, dans les modes de réalisation décrits ci-dessus, ne doit pas être compris comme exigeant un tel agencement dans toutes les implémentations. D'autres variantes peuvent être prévues et notamment :
- l'élément optique mobile 381 n'est pas nécessairement un miroir plan mais peut être un miroir convexe, ou un élément réfléchissant, par exemple une lame réfléchissante.
- dans le septième mode de réalisation, le miroir secondaire 383 peut être configuré pour ramener le plan focal 33 entre le miroir primaire 382 et ledit miroir secondaire. Les matrices 361, 362 sont alors agencées pour pouvoir être placées dans ce plan focal.

## Revendications

1. Procédé d'acquisition d'image d'un astre (50, 51), comportant les étapes suivantes :
- utiliser un appareil (30) comportant un corps creux (302) à l'intérieur duquel pénètrent, en usage, des rayons lumineux (34) provenant d'un astre (50, 51) observé, ledit astre observé étant choisi parmi au moins un premier astre (50 ou 51) d'une première nature et un deuxième astre (50 ou 51) d'une deuxième nature, la nature du premier astre (50 ou 51) étant différente de la nature du deuxième astre (50 ou 51),
- agencer, dans le corps creux (302), un système optique (31, 382, 383) présentant un axe optique (32), lequel système optique est configuré de sorte que les rayons lumineux (34) forment, dans un foyer image (330) situé dans un plan focal (33), une image de l'astre (50, 51) observé,
**caractérisé en ce qu'**il comprend également les étapes suivantes :
- agencer dans le corps creux (302) au moins une première et une deuxième matrices (361, 362) de capteurs optiques comportant chacun une pluralité de pixels configurés pour acquérir l'image, respectivement du premier astre (50 ou 51) et du deuxième astre (50 ou 51), formée dans le foyer image (330), lesquelles matrices (361, 362) présentent respectivement des pixels de taille différente l'une de l'autre,
- sélectionner une des matrices (361, 362) et la placer dans le foyer image (330), l'autre matrice restant en dehors dudit foyer image, la sélection de la matrice étant réalisée en fonction de la nature de l'astre (50, 51) observé, soit le susdit premier astre (50 ou 51) de première nature soit le susdit deuxième astre (50 ou 51) de deuxième nature.

2. Procédé selon la revendication 1, dans lequel la première et la deuxième matrices (361, 362) s'étendent dans le plan focal (33) lors de l'ensemble des étapes du procédé.

3. Procédé selon la revendication 2, dans lequel l'étape de sélection d'une des matrices (361, 362) s'opère par translation de l'une et/ou de l'autre des matrices (361, 362) de manière à placer l'une des matrices (361, 362) dans le foyer image (330).

4. Procédé selon la revendication 1, dans lequel l'étape de sélection d'une des matrices (361, 362) s'opère par rotation de l'une et/ou de l'autre des matrices (361, 362), au moins l'une des matrices (361, 362) n'étant initialement pas dans le plan focal (33).

5. Procédé selon l'une quelconque des revendications précédentes, comprenant les étapes suivantes :
- fixer les matrices (361, 362) sur un support (35) mobile,
- déplacer le support mobile (35) pour placer la matrice (361, 362) sélectionnée dans le foyer image (330).

6. Procédé selon la revendication 5, comprenant les étapes consistant à :
- motoriser le support mobile (35) au moyen d'un moteur,
- piloter le moteur pour déplacer le support mobile (35).

7. Procédé selon la revendication 1, comprenant les étapes suivantes :
- installer les matrices (361, 362) dans des positions fixes,
- utiliser un système optique comportant un élément optique (381) qui est mobile de manière à faire varier la position du foyer image (330),
- déplacer l'élément optique mobile (381) de manière à ramener le foyer image (330) au niveau de la matrice (361, 362) sélectionnée.

8. Procédé selon la revendication 7, comprenant les étapes consistant à :
- motoriser l'élément optique mobile (381) au moyen d'un moteur,
- piloter le moteur pour déplacer l'élément optique mobile (381).

9. Procédé selon la revendication 6 ou la revendication 8, comprenant les étapes consistant à :
- connecter le moteur à une unité de traitement (39),
- piloter le moteur :
- en activant un ou plusieurs boutons aménagés sur l'appareil (30) et connectés à l'unité de traitement (39), ou
- en transmettant des instructions de commande à l'unité de traitement (39), lesquelles instructions sont émises depuis un téléphone intelligent.

10. Procédé selon la revendication 6 ou la revendication 8, comprenant les étapes consistant à :
- enregistrer, dans une base de données, des enregistrements d'astres, chaque enregistrement étant associé à une des matrices (361, 362) et à des données de localisation en temps réel de l'astre,
- sélectionner, dans la base de données, un enregistrement d'astre,
- piloter le moteur en fonction de la matrice (361, 362) associée à l'enregistrement sélectionné,
- orienter automatiquement l'appareil (30) vers la localisation de l'astre (50, 51), en fonction des données de localisation associées à l'enregistrement sélectionné.

11. Procédé selon la revendication 6 ou la revendication 8, comprenant les étapes consistant à :
- acquérir une image d'un astre (50, 51) observé dans une scène d'observation, laquelle acquisition est réalisée au moyen d'une des matrices (362) sélectionnée en fonction de la nature dudit astre,
- exécuter un processus informatique configuré pour détecter le déplacement d'un autre astre dans la scène d'observation,
- sélectionner l'autre matrice (361),
- piloter le moteur en fonction de l'autre matrice sélectionnée (361).

12. Procédé selon la revendication 6 ou la revendication 8, comprenant les étapes consistant à :
- enregistrer, dans une base de données, des enregistrements d'astres, chaque enregistrement étant associé à une des matrices (361, 362) et à au moins un élément caractéristique de l'astre,
- acquérir une image d'un astre (50, 51), laquelle acquisition est réalisée au moyen d'une des matrices (361, 362),
- exécuter un processus informatique de reconnaissance configuré pour détecter, dans l'image acquise, au moins un élément caractéristique dudit astre,
- identifier, dans la base de données, un enregistrement d'astre associé à un élément caractéristique similaire à celui détecté,
- sélectionner la matrice (361, 362) associée à l'enregistrement identifié,
- si la matrice (361, 362) ayant acquise l'image ne correspond pas à la matrice sélectionnée, alors piloter le moteur en fonction de ladite matrice sélectionnée.

13. Appareil pour l'acquisition d'image d'un astre (50, 51), comportant :
- un corps creux (302) à l'intérieur duquel pénètrent, en usage, des rayons lumineux (34) provenant d'un astre (50, 51) observé, ledit astre observé étant choisi parmi au moins un premier astre (50 ou 51) d'une première nature et un deuxième astre (50 ou 51) d'une deuxième nature, la nature du premier astre (50 ou 51) étant différente de la nature du deuxième astre (50 ou 51),
- un système optique agencé dans le corps creux (302) et présentant un axe optique (32), lequel système est configuré de sorte que les rayons lumineux (34) forment, dans un foyer image (330) situé dans un plan focal (33), une image de l'astre observé (50, 51),
**caractérisé en ce que** l'appareil (30) comporte :
- au moins une première et une deuxième matrices (361, 362) de capteurs optiques, comportant chacun une pluralité de pixels, configurés pour acquérir l'image, respectivement du premier astre (50 ou 51) et du deuxième astre (50 ou 51), formée dans le foyer image (330), lesquelles matrices (361, 362) présentent respectivement des pixels de taille différente l'une de l'autre,
- un dispositif de sélection de matrices (361, 362) adapté pour placer une des deux matrices (361, 362) dans le foyer image (330), l'autre matrice (361, 362) restant en dehors dudit foyer image, de sorte que l'astre observé est le premier astre (50 ou 51) de première nature ou le deuxième astre (50 ou 51) de deuxième nature.

14. Appareil selon la revendication 13, dans lequel la première matrice (361) et la deuxième matrice (362) ont des tailles différentes.

15. Appareil selon l'une des revendications 13 ou 14, dans lequel le foyer image (330) est fixe et les matrices (361, 362) sont mobiles.

16. Appareil selon la revendication 13 ou 14, dans lequel les matrices (361, 362) sont fixées sur un support (35) qui est mobile entre :
- une première position dans laquelle la première matrice (361) est placée dans le foyer image (330), et dans laquelle la deuxième matrice (361) est placée en dehors dudit foyer image,
- une deuxième position dans laquelle la deuxième matrice (362) est placée dans le foyer image (330), et dans laquelle la première matrice (361) est placée en dehors dudit foyer image.

17. Appareil selon la revendication 16, dans lequel le support (35) est mobile en rotation ou mobile en translation.

18. **Appareil selon l'une des revendications** 13 ou 14, dans lequel les matrices (361, 362) sont fixes et le foyer image (330) est mobile.

19. Appareil selon la revendication 18, dans lequel le système optique comporte un élément optique (381) qui est mobile de manière à faire varier la position du foyer image (330).

20. Appareil selon la revendication 19, dans lequel l'élément optique (381) est mobile entre :
- une première position dans laquelle le foyer image (330) est ramené au niveau de la première matrice (361),
- une deuxième position dans laquelle le foyer image (330) est ramené au niveau de la deuxième matrice (361).

21. Appareil selon l'une des revendications 13 à 20, dans lequel le système optique comporte :
- un miroir primaire (382) positionné dans le corps creux (302), pour réfléchir les rayons lumineux (34) pénétrant dans ledit corps,
- un miroir secondaire (383) positionné dans le corps creux (302) pour réfléchir les rayons lumineux réfléchis par le miroir primaire (382), lequel miroir secondaire est adapté pour ramener le plan focal (33) derrière le miroir primaire (382),
- les matrices (361, 362) sont agencées derrière le miroir primaire (382).

22. Appareil selon l'une des revendications 13 à 21, se présentant sous la forme d'un télescope.

## Patentansprüche

1. Verfahren zur Bilderfassung eines Gestirns (50, 51), das die folgenden Schritte aufweist:
- Verwenden eines Geräts (30) das einen Hohlkörper (302) aufweist, in dessen Inneres bei Benutzung Lichtstrahlen (34) eindringen, die von einem beobachteten Gestirn (50, 51) stammen, wobei das beobachtete Gestirn unter mindestens einem ersten Gestirn (50 oder 51) einer ersten Beschaffenheit und einem zweiten Gestirn (50 oder 51) einer zweiten Beschaffenheit ausgewählt wird, wobei die Beschaffenheit des ersten Gestirns (50 oder 51) sich von der Beschaffenheit des zweiten Gestirns (50 oder 51) unterscheidet,
- Anordnen eines optischen Systems (31, 382, 383) mit einer optischen Achse (32) im Hohlkörper (302), wobei das optische System so konfiguriert ist, dass die Lichtstrahlen (34) in einem in einer Brennebene (33) befindlichen Bildbrennpunkt (330) ein Bild des beobachteten Gestirns (50, 51) formen,
**dadurch gekennzeichnet, dass** es ebenfalls die folgenden Schritte enthält:
- Anordnen mindestens einer ersten und einer zweiten Matrix (361, 362) von optischen Sensoren im Hohlkörper (302), die je eine Vielzahl von Pixeln aufweisen, die konfiguriert sind, das Bild des ersten Gestirns (50 oder 51) bzw. des zweiten Gestirns (50 oder 51) zu erfassen, das im Bildbrennpunkt (330) geformt wird, wobei die Matrizen (361, 362) jeweils Pixel voneinander unterschiedlicher Größe aufweisen,
- Auswählen einer der Matrizen (361, 362) und sie im Bildbrennpunkt (330) platzieren, wobei die andere Matrix außerhalb des Bildbrennpunkts bleibt, wobei die Auswahl der Matrix abhängig von der Beschaffenheit des beobachteten Gestirns (50, 51), entweder des ersten Gestirns (50 oder 51) erster Beschaffenheit oder des zweiten Gestirns (50 oder 51) zweiter Beschaffenheit, durchgeführt wird.

2. Verfahren nach Anspruch 1, wobei die erste und die zweite Matrix (361, 362) sich während der Gesamtheit der Schritte des Verfahrens in der Brennebene (33) erstrecken.

3. Verfahren nach Anspruch 2, wobei der Schritt der Auswahl einer der Matrizen (361, 362) durch Translation der einen und/oder der anderen der Matrizen (361, 362) derart erfolgt, dass eine der Matrizen (361, 362) im Bildbrennpunkt (330) platziert wird.

4. Verfahren nach Anspruch 1, wobei der Schritt der Auswahl einer der Matrizen (361, 362) durch Rotation der einen und/oder der anderen der Matrizen (361, 362) erfolgt, wobei mindestens eine der Matrizen (361, 362) anfangs nicht in der Brennebene (33) ist.

5. Verfahren nach einem der vorhergehenden Ansprüche, das die folgenden Schritte enthält:
- Befestigen der Matrizen (361, 362) auf einem beweglichen Träger (35),
- Verschieben des beweglichen Trägers (35), um die ausgewählte Matrix (361, 362) im Bildbrennpunkt (330) zu platzieren.

6. Verfahren nach Anspruch 5, das die Schritte enthält, die darin bestehen:
- den beweglichen Träger (35) mittels eines Motors zu motorisieren,
- den Motor zu lenken, um den beweglichen Träger (35) zu verschieben.

7. Verfahren nach Anspruch 1, das die folgenden Schritte enthält:
- Einbau der Matrizen (361, 362) in ortsfesten Positionen,
- Verwenden eines optischen Systems, das ein optisches Element (381) aufweist, das beweglich ist, um die Position des Bildbrennpunkts (330) zu verändern,
- Verschieben des beweglichen optischen Elements (381), um den Bildbrennpunkt (330) in den Bereich der ausgewählten Matrix (361, 362) zurückzuführen.

8. Verfahren nach Anspruch 7, das die Schritte enthält, die darin bestehen:
- das bewegliche optische Elements (381) mittels eines Motors zu motorisieren,
- den Motor zu lenken, um das bewegliche optische Element (381) zu verschieben.

9. Verfahren nach Anspruch 6 oder Anspruch 8, das die Schritte enthält, die darin bestehen:
- den Motor mit einer Verarbeitungseinheit (39) zu verbinden,
- den Motor zu lenken:
- durch Betätigen einer oder mehrerer auf dem Gerät (30) angebrachter und mit der Verarbeitungseinheit (39) verbundener Tasten, oder
- durch Übertragung von Steueranweisungen an die Verarbeitungseinheit (39), welche Anweisungen von einem Smartphone gesendet werden.

10. Verfahren nach Anspruch 6 oder Anspruch 8, das die Schritte enthält, die darin bestehen:
- Gestirn-Datensätze in einer Datenbank zu speichern, wobei jeder Datensatz einer der Matrizen (361, 362) und Echtzeit-Lokalisierungsdaten des Gestirns zugeordnet ist,
- einen Gestirn-Datensatz in der Datenbank auszuwählen,
- den Motor abhängig von der dem ausgewählten Datensatz zugeordneten Matrix (361, 362) zu lenken,
- abhängig von den dem ausgewählten Datensatz zugeordneten Lokalisierungsdaten das Gerät (30) automatisch zur Lokalisierung des Gestirns (50, 51) auszurichten.

11. Verfahren nach Anspruch 6 oder Anspruch 8, das die Schritte enthält, die darin bestehen:
- ein Bild eines in einer Beobachtungsszene beobachteten Gestirns (50, 51) zu erfassen, wobei die Erfassung mittels einer der Matrizen (362) durchgeführt wird, die abhängig von der Beschaffenheit des Gestirns ausgewählt wird,
- einen Informatikprozess auszuführen, der konfiguriert ist, die Verschiebung eines anderen Gestirns in der Beobachtungsszene zu erkennen,
- die andere Matrix (361) auszuwählen,
- den Motor abhängig von der anderen ausgewählten Matrix (361) zu lenken.

12. Verfahren nach Anspruch 6 oder Anspruch 8, das die Schritte enthält, die darin bestehen:
- in einer Datenbank Gestirn-Datensätze zu speichern, wobei jeder Datensatz einer der Matrizen (361, 362) und mindestens einem charakteristischen Element des Gestirns zugeordnet ist,
- ein Bild eines Gestirns (50, 51) zu erfassen, wobei die Erfassung mittels einer der Matrizen (361, 362) durchgeführt wird,
- einen Informatikprozess der Erkennung auszuführen, der konfiguriert ist, im erfassten Bild mindestens ein charakteristisches Element des Gestirns zu erkennen,
- in der Datenbank einen Gestirn-Datensatz zu identifizieren, der einem charakteristischen Element ähnlich dem erkannten zugeordnet ist,
- die dem identifizierten Datensatz zugeordnete Matrix (361, 362) auszuwählen,
- wenn die Matrix (361, 362), die das Bild erfasst hat, nicht der ausgewählten Matrix entspricht, den Motor abhängig von der ausgewählten Matrix zu lenken.

13. Gerät zur Bilderfassung eines Gestirns (50, 51), das aufweist:
- einen Hohlkörper (302), in dessen Inneres bei Benutzung Lichtstrahlen (34) eindringen, die von mindestens einem beobachteten Gestirn (50, 51) stammen, wobei das beobachtete Gestirn unter mindestens einem ersten Gestirn (50 oder 51) einer ersten Beschaffenheit und einem zweiten Gestirn (50 oder 51) einer zweiten Beschaffenheit ausgewählt wird, wobei die Beschaffenheit des ersten Gestirns (50 oder 51) sich von der Beschaffenheit des zweiten Gestirns (50 oder 51) unterscheidet,
- ein optisches System, das im Hohlkörper (302) angeordnet ist und eine optische Achse (32) aufweist, wobei das System so konfiguriert ist, dass die Lichtstrahlen (34) in einem in einer Brennebene (33) befindlichen Bildbrennpunkt (330) ein Bild des beobachteten Gestirns (50, 51) formen,
**dadurch gekennzeichnet, dass** das Gerät (30) aufweist:
- mindestens eine erste und eine zweite Matrix (361, 362) von optischen Sensoren, die je eine Vielzahl von Pixeln aufweisen, die konfiguriert sind, das Bild des ersten Gestirns (50 oder 51) bzw. des zweiten Gestirns (50 oder 51) zu erfassen, das im Bildbrennpunkt (330) geformt wird, wobei die Matrizen (361, 362) jeweils Pixel voneinander unterschiedlicher Größe aufweisen,
- eine Auswahlvorrichtung von Matrizen (361, 362), die geeignet ist, eine der zwei Matrizen (361, 362) im Bildbrennpunkt (330) zu platzieren, während die andere Matrix (361, 362) außerhalb des Bildbrennpunkts bleibt, so dass das beobachtete Gestirn das erste Gestirn (50 oder 51) erster Beschaffenheit oder das zweite Gestirn (50 oder 51) zweiter Beschaffenheit ist.

14. Gerät nach Anspruch 13, wobei die erste Matrix (361) und die zweite Matrix (362) unterschiedliche Größen haben.

15. Gerät nach einem der Ansprüche 13 oder 14, wobei der Bildbrennpunkt (330) ortsfest ist und die Matrizen (361, 362) beweglich sind.

16. Gerät nach Anspruch 13 oder 14, wobei die Matrizen (361, 362) auf einem Träger (35) befestigt sind, der beweglich ist zwischen:
- einer ersten Position, in der die erste Matrix (361) im Bildbrennpunkt (330) platziert ist, und in der die zweite Matrix (361) außerhalb des Bildbrennpunkts platziert ist,
- einer zweiten Position, in der die zweite Matrix (362) im Bildbrennpunkt (330) platziert ist, und in der die erste Matrix (361) außerhalb des Bildbrennpunkts platziert ist.

17. Gerät nach Anspruch 16, wobei der Träger (35) rotationsbeweglich oder translationsbeweglich ist.

18. Gerät nach einem der Ansprüche 13 oder 14, wobei die Matrizen (361, 362) ortsfest sind und der Bildbrennpunkt (330) beweglich ist.

19. Gerät nach Anspruch 18, wobei das optische System ein optisches Element (381) aufweist, das beweglich ist, um die Position des Bildbrennpunkts (330) zu verändern.

20. Gerät nach Anspruch 19, wobei das optische Element (381) beweglich ist zwischen:
- einer ersten Position, in der der Bildbrennpunkt (330) in den Bereich der ersten Matrix (361) zurückgeführt ist,
- einer zweiten Position, in der der Bildbrennpunkt (330) in den Bereich der zweiten Matrix (361) zurückgeführt ist.

21. Gerät nach einem der Ansprüche 13 bis 20, wobei das optische System aufweist:
- einen im Hohlkörper (302) positionierten Primärspiegel (382), um die in den Körper eindringenden Lichtstrahlen (34) zu reflektieren,
- einen im Hohlkörper (302) positionierten Sekundärspiegel (383), um die vom Primärspiegel (382) reflektierten Lichtstrahlen zu reflektieren, wobei der Sekundärspiegel geeignet ist, die Brennebene (33) hinter den Primärspiegel (382) zurückzuführen,
- die Matrizen (361, 362) sind hinter dem Primärspiegel (382) angeordnet.

22. Gerät nach einem der Ansprüche 13 bis 21, das in Form eines Teleskops vorliegt.

## Claims

1. Method for acquiring an image of a celestial body (50, 51), comprising the following steps:
- using a device (30) comprising a hollow body (302) into which light rays (34) coming from a celestial body (50, 51) under observation enter during use, said celestial body under observation being chosen from among at least a first celestial body (50 or 51) of a first nature and a second celestial body (50 or 51) of a second nature, the nature of the first celestial body (50 or 51) being different from the nature of the second celestial body (50 or 51),
- arranging an optical system (31, 382, 383) having an optical axis (32) in the hollow body (302), which optical system is configured such that the light rays (34) form an image of the celestial body (50, 51) under observation in an image focus (330) located in a focal plane (33),
**characterized in that** it also comprises the following steps:
- arranging, in the hollow body (302), at least a first and a second matrix (361, 362) of optical sensors, each comprising a plurality of pixels configured to acquire the image, respectively of the first celestial body (50 or 51) and of the second celestial body (50 or 51), formed in the image focus (330), which matrices (361, 362) respectively have pixels of a size different from one another,
- selecting one of the matrices (361, 362) and placing it in the image focus (330), the other matrix remaining outside said image focus, the matrix being selected on the basis of the nature of the celestial body (50, 51) under observation, either the abovementioned first celestial body (50 or 51) of a first nature or the abovementioned second celestial body (50 or 51) of a second nature.

2. Method according to Claim 1, wherein the first and the second matrices (361, 362) extend in the focal plane (33) during all of the steps of the method.

3. Method according to Claim 2, wherein the step of selecting one of the matrices (361, 362) is carried out by moving one and/or the other of the matrices (361, 362) in translation so as to place one of the matrices (361, 362) in the image focus (330).

4. Method according to Claim 1, wherein the step of selecting one of the matrices (361, 362) is carried out by rotating one and/or the other of the matrices (361, 362), at least one of the matrices (361, 362) not initially being in the focal plane (33).

5. Method according to any one of the preceding claims, comprising the following steps:
- attaching the matrices (361, 362) to a mobile carrier (35),
- moving the mobile carrier (35) so as to place the selected matrix (361, 362) in the image focus (330).

6. Method according to Claim 5, comprising the following steps:
- motorizing the mobile carrier (35) by way of a motor,
- driving the motor so as to move the mobile carrier (35) .

7. Method according to Claim 1, comprising the following steps:
- installing the matrices (361, 362) in fixed positions,
- using an optical system comprising an optical element (381) that is able to move so as to vary the position of the image focus (330),
- moving the mobile optical element (381) so as to bring the image focus (330) into the selected matrix (361, 362) .

8. Method according to Claim 7, comprising the following steps:
- motorizing the mobile optical element (381) by way of a motor,
- driving the motor so as to move the mobile optical element (381).

9. Method according to Claim 6 or Claim 8, comprising the following steps:
- connecting the motor to a processing unit (39),
- driving the motor:
- by activating one or more buttons arranged on the device (30) and connected to the processing unit (39), or
- by transmitting control instructions to the processing unit (39), which instructions are transmitted from a smartphone.

10. Method according to Claim 6 or Claim 8, comprising the following steps:
- recording records of celestial bodies in a database, each record being associated with one of the matrices (361, 362) and with real-time location data in relation to the celestial body,
- selecting a celestial body record in the database,
- driving the motor on the basis of the matrix (361, 362) associated with the selected record,
- automatically pointing the device (30) at the location of the celestial body (50, 51), on the basis of the location data associated with the selected record.

11. Method according to Claim 6 or Claim 8, comprising the following steps:
- acquiring an image of a celestial body (50, 51) under observation in an observation scene, which acquisition is carried out by way of one of the matrices (362) selected on the basis of the nature of said celestial body,
- carrying out a computerized process configured to detect the movement of another celestial body in the observation scene,
- selecting the other matrix (361),
- driving the motor on the basis of the selected other matrix (361).

12. Method according to Claim 6 or Claim 8, comprising the following steps:
- recording records of celestial bodies in a database, each record being associated with one of the matrices (361, 362) and with at least one characteristic element of the celestial body,
- acquiring an image of a celestial body (50, 51), which acquisition is carried out by way of one of the matrices (361, 362),
- carrying out a computerized recognition process configured to detect, in the acquired image, at least one characteristic element of said celestial body,
- identifying, in the database, a celestial body record associated with a characteristic element similar to the one detected,
- selecting the matrix (361, 362) associated with the identified record,
- if the matrix (361, 362) that acquired the image does not correspond to the selected matrix, then driving the motor on the basis of said selected matrix.

13. Device for acquiring an image of a celestial body (50, 51), comprising:
- a hollow body (302) into which light rays (34) coming from a celestial body (50, 51) under observation enter during use, said celestial body under observation being chosen from among at least a first celestial body (50 or 51) of a first nature and a second celestial body (50 or 51) of a second nature, the nature of the first celestial body (50 or 51) being different from the nature of the second celestial body (50 or 51),
- an optical system arranged in the hollow body (302) and having an optical axis (32), which system is configured such that the light rays (34) form an image of the celestial body (50, 51) under observation in an image focus (330) located in a focal plane (33),
**characterized in that** the device (30) comprises:
- at least a first and a second matrix (361, 362) of optical sensors, each comprising a plurality of pixels configured to acquire the image, respectively of the first celestial body (50 or 51) and of the second celestial body (50 or 51), formed in the image focus (330), which matrices (361, 362) respectively have pixels of a size different from one another,
- a device for selecting matrices (361, 362), designed to place one of the two matrices (361, 362) in the image focus (330), the other matrix (361, 362) remaining outside said image focus, such that the celestial body under observation is the first celestial body (50 or 51) of a first nature or the second celestial body (50 or 51) of a second nature.

14. Device according to Claim 13, wherein the first matrix (361) and the second matrix (362) have different sizes.

15. Device according to either of Claims 13 and 14, wherein the image focus (330) is fixed and the matrices (361, 362) are mobile.

16. Device according to Claim 13 or 14, wherein the matrices (361, 362) are attached to a carrier (35) that is able to move between:
- a first position in which the first matrix (361) is placed in the image focus (330), and in which the second matrix (361) is placed outside said image focus,
- a second position in which the second matrix (362) is placed in the image focus (330), and in which the first matrix (361) is placed outside said image focus.

17. Device according to Claim 16, wherein the carrier (35) is able to move in rotation or able to move in translation.

18. Device according to either of Claims 13 and 14, wherein the matrices (361, 362) are fixed and the image focus (330) is mobile.

19. Device according to Claim 18, wherein the optical system comprises an optical element (381) that is able to move so as to vary the position of the image focus (330).

20. Device according to Claim 19, wherein the optical element (381) is able to move between:
- a first position in which the image focus (330) is brought into the first matrix (361),
- a second position in which the image focus (330) is brought into the second matrix (361).

21. Device according to one of Claims 13 to 20, wherein the optical system comprises:
- a primary mirror (382) positioned in the hollow body (302), so as to reflect the light rays (34) entering said body,
- a secondary mirror (383) positioned in the hollow body (302) so as to reflect the light rays reflected by the primary mirror (382), which secondary mirror is designed to bring the focal plane (33) behind the primary mirror (382),
- the matrices (361, 362) are arranged behind the primary mirror (382).

22. Device (30) according to one of Claims 13 to 21, in the form of a telescope.
